# EUROPEAN PATENT SPECIFICATION

(11) **EP 2 537 371 B1**
(45) Date of publication and mention of the grant of the patent: **22.01.2020**
(21) Application number: 11712005.5
(22) Date of filing: 15.02.2011
(51) Int. Cl.: H04W 48/02, H04W 4/70, H04W 48/08

(54) **ACCESS CONTROL FOR M2M DEVICES**
ZUGANGSSTEUERUNG FÜR M2M-GERÄTE
CONTRÔLE D'ACCÈS POUR DISPOSITIFS M2M

(30) Priority: 15.02.2010 US 304716 P
(43) Date of publication of application: 26.12.2012
(73) Proprietor: Telefonaktiebolaget LM Ericsson (publ), 164 83 Stockholm (SE)
(72) Inventor: SEGURA, Louis, Saint Laurent Québec H4L 4C8 (CA)
(74) Representative: Ericsson
(86) International application number: PCT/IB2011/050630
(87) International publication number: WO 2011/098992

(56) References cited:
- US-A1- 2005 215 241
- US-A1- 2009 285 166
- US-B2- 7 103 310
- "3rd Generation Partnership Project;Technical Specification Group Services and System Aspects;Access Class Barring and Overload Protection; (Release 6)", 3GPP DRAFT; TR 23.898 V 2.0.0 MARKED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Budapest, 11 February 2005 (2005-02-11), XP050432266, [retrieved on 2005-02-11]
- "LTE; Evolved Universal Terrestrial Radio Access (E-UTRA); Radio Resource Control (RRC); Protocol specification (3GPP TS 36.331 version 9.1.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V9.1.0, 1 February 2010 (2010-02-01), XP014046913,
- ETSI: "3GPP TR 22.868 V8.0.0 (2007-03) - 3rd Generation Partnership Project;Technical Specification Group Services and System Aspects;Study on Facilitating Machine to Machine Communication in 3GPP Systems; (Release 8)", 3RD GENERATION PARTNERSHIP PROJECT (3GPP); TECHNICAL REPORT (TR), XX, XX, no. TR 22.868 V8.0.0, 26 March 2007 (2007-03-26), pages 1-15, XP002589914, [retrieved on 2010-06-28]
- ALCATEL-LUCENT: "Time Controlled MTC feature", 3GPP DRAFT; S2-100868, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Shenzhen; 20100118, 22 January 2010 (2010-01-22), XP050433298, [retrieved on 2010-01-22]
- CATT: "Access control of MTC devices", 3GPP DRAFT; R2-100182, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Valencia, Spain; 20100118, 12 January 2010 (2010-01-12), XP050420962, [retrieved on 2010-01-12]

## Description

### BACKGROUND

Access Class Barring (ACB) is a known operation in mobile networks, whereby devices of certain classes can be barred from using defined resources so that other devices can be provided priority.

At present, access class barring is geared towards distinguishing access control between a mobile assigned an access class for "normal" uniform access control treatment (0-9) and higher priority classes. These classes were defined when essentially all devices were used by human operators, and did not anticipate the rise of machine-to-machine (M2M) operation. Accordingly, the current specifications related to ACB mechanism lack mechanism to differentiate between M2M devices and human operated devices. As such, there is a lack of procedures that can be directed to sending messages and instructions exclusively to M2M devices.

As more devices, both human operated and M2M, are added to the network, the likelihood of congestion on the radio access channels increases. Many M2M devices are used for automated reporting of values to a centralized system, and through timely access is desired, it is often not so crucial that an M2M device cannot delay its access to a congested network. Meanwhile, human operators of network devices are more prone to being inconvenienced by congested networks that may require that their device be disconnected or even refused access temporarily. Without the ability to treat M2M devices differently than human operated devices, as loads on a network increase, an M2M device that does not need timely access to the network is treated the same as a human operated device. By providing a mechanism to differentiate M2M devices from other network devices the appearance of network congestion can be mitigated.

Therefore, it would be desirable to provide a system and method that obviate or mitigate the above described problems.

US 2009/285166 A1 may be construed to disclose system(s) and method(s) to provide access management to femtocell service through access control list(s) (e.g., white list(s)). A white list(s) includes a set of subscriber station(s) identifier numbers, codes or tokens, and also can include additional fields for femtocell access management based on desired complexity. Various example aspects such as white list(s) management, maintenance and dissemination; pre-configuration; and inclusion of wireless device(s) or subscriber(s) are also provided. An access management component can facilitate interactive and automatic prompting of detected communication devices to facilitate granting access to content and/or services associated with the femtocell to a desired communication device(s) and adding a desired communication device(s) to the white list(s) associated with a femtocell, and to facilitate modifying or terminating access of the femtocell by a communication device(s) based in part on monitored activity of the communication device(s) with regard to femtocell access.

3GPP draft TR 23.898 V 2.0.0 may be construed to disclose 3GPP system enhancements, e.g. CS or PS domain specific access control to cope with several network overload and failure situations. There are also identified the potential technical solutions for UTRAN and GERAN access control and overload protection.

US 2005/215241 A1 may be construed to disclose a technique for synchronization of a wireless downlink in an existing mobile communication network is established and system notifying information from the existing mobile communication network is received. Synchronization of a wireless uplink in the existing mobile communication network is established and a layer-3 wireless channel establishment requesting message is received. A communication restricting state (ON/OFF state) for each service type (circuit switching service or packet switching service) is confirmed and the communication restricting state (ON/OFF state) is confirmed on the basis of a speed threshold value, based on a result of which confirmation, communication restriction is performed.

"Time Controlled MTC feature", Alcatel-Lucent, 3GPP draft S2-100868 may be construed to disclose service requirements for the Time Controlled MTC feature. The MTC Feature Time Controlled is intended for use with MTC Devices that send or receive data only at certain pre-defined periods and avoid unnecessary signalling outside these pre-defined periods.

"Access control of MTC devices", CATT, 3GPP draft R2-100182 may be construed to disclose a technique pertaining to implement access control of MTC devices so as to alleviate the influence caused by the access of MTC devices. In that document, the access control of MTC devices is investigated and some possible alternatives are provided.

### SUMMARY

It is an object of the present invention to obviate or mitigate at least one disadvantage of the prior art.

According to the present disclosure, there are provided a method, a radio access network node and a computer-readable medium according to the independent claims. Developments are set forth in the dependent claims.

### BRIEF DESCRIPTION OF THE DRAWINGS

The present invention can be described, by way of example, with reference to the Figures, wherein;
Figure 1 is a block diagram illustrating a mobile device of a comparative example;
Figure 2 is a representation of a SIBType2 message according to the present invention.
Figure 3 is a flowchart illustrating an exemplary method of the present invention;
Figure 4 is a flowchart illustrating an exemplary method of the present invention;
Figure 5 is a flowchart illustrating an exemplary method of the present invention;
Figure 6 is a flowchart illustrating an exemplary method of the present invention;
Figure 7 is a flowchart illustrating an exemplary method of a comparative example;
Figure 8 is a flowchart illustrating an exemplary method of a comparative example;
Figure 9 is a block diagram illustrating an exemplary radio access network element of the present invention; and
Figure 10 is a block diagram illustrating an exemplary mobile device of a comparative example.

### DETAILED DESCRIPTION

Reference may be made below to specific elements, numbered in accordance with the attached figures. The discussion below should be taken to be exemplary in nature, and not as limiting of the scope of the present invention.

In the following discussion, a solution to the problems outlined above is provided. The method and system disclosed below allows broadcast of access class barring information to be used by M2M devices. Such a message can be used in a variety of different situations including an overloaded cell condition, which may be caused through misbehaving/misconfiguration of M2M devices or simply through excessive use of the radio access network. This provides the network operator the capability to independently bar M2M (machine-to-machine) and H2H (human-to-human) devices with different probability factors and barring times providing the means to bar possibly lower priority M2M devices while not necessarily having to restrict Random Access Channel (RACH) access to "normal" H2H oriented devices.

The extension of the Access Class Barring (ACB) functions, to specifically address a type of device instead of just a random class, can provide greater flexibility to the operator in restricting access to M2M devices in overload situations. In embodiments discussed below, a special category of M2M devices can also be implemented such that members of this class are not necessarily be barred in high load situations and can potentially take priority over H2H communications.

Those skilled in the art will appreciate that in discussions of Access Class g, the following points are understood:
- Under certain circumstances, it may be desirable to prevent users of user equipment UE from making access attempts.
- Broadcast messages are preferably available on a cell by cell basis indicating the class(es) of subscribers barred from network access.
- The use of an ACB facility allows the network operator to prevent overload of the access channel under critical conditions.
- Access control functions are typically not used under normal operating conditions.

In conventional mobile networks, each piece of User Equipment (UE) is a member of one of ten randomly allocated mobile populations, defined as Access Classes 0 to 9. The population number is stored in the SIM/USIM. In addition, mobile devices may be members of one or more out of 5 special categories (Access Classes 11 to 15), also identified by configuration data in the SIM/USIM. These are allocated to specific high priority users as follows. (The enumeration is not meant as a priority sequence):

| | |
|---|---|
| Class 15 | PLMN Staff |
| Class 14 | Emergency Services |
| Class 13 | Public Utilities (e.g. Water/Gas suppliers) |
| Class 12 | Security Services |
| Class 11 | Reserved for PLMN use |

In conventional implementations, UEs dedicated to performing M2M functions are to the existing classes 0-9 which are shared with H2H devices. As a result, there is no convenient mechanism through which the operator to selectively bar M2M devices from accessing the RACH. Adding a new class would involve creating incompatibilities in a number of network services, and as a result is not considered to be a reasonable solution. Similarly, none of classes 0-9 can be set aside now as there are many H2H devices in each of these classes.

Current specifications for mobile networks allow for Selective Access Class Barring. A broadcast message, such as Ac-BarringForSpecialAC bitmap in SIB2, informs devices in at least one of Access Classes 11-15 that they can ignore cell barring. This allows higher priority devices to maintain their access (or start new access) to the RACH. "Normal" devices (non-access class 11-15) can be barred with a certain probability using ac-Barringfactor and ac-BarringTime type messages along with a random factor to determine the resulting barring time. This allows normal (human-to-human) and M2M devices to be barred in conventional networks, which lowers the load on the RACH channel thereby allowing priority users to be exempt from suffering congestion when accessing the RACH.

As more M2M devices are added to the network, they will be randomly assigned membership in one of classes 0-9, as well as being assigned a higher class as needed (e.g. AC 12 for an M2M device providing special security service, or AC 14 for devices that generate emergency calls). As a result, it is not possible in conventional networks to selectively bar lower priority M2M without also barring "normal" devices (and impacting H2H communication).

Lower priority M2M devices could include a typical massive deployment of M2M devices which must periodically report data to a server but for which exact reporting time is not critical (i.e. time sensitive) and in particular can be delayed in an overload situation. One example of such a device is a so-called smart-meter used for monitoring electrical usage. A delay in the reporting from such a device has at most a negligible impact. In addition given the flexibility that is envisioned for programming/configuration of M2M devices there is a real risk that a faulty configuration in the large set of M2M devices (e.g. millions of smart utility meters) could result in RACH overload due to exclusive and simultaneous access by M2M devices. To address this, all members of the class to which the devices have been assigned would likely be barred from accessing the network until the problem was resolved. This could result in the appearance of a large system failure for human operated devices.

Mechanisms of the present invention replicate and extend access control exclusively for M2M based on existing H2H based mechanisms. An M2M device is assigned internal configuration setting that can indicate that it is an M2M device, and is then, as before, randomly allocated an access class (0-9) and potentially additional higher access classes (11-15). A solution modeled on access control as per TS 36.331 (chapter 5.3.3.2) that replicates access barring information but adds broadcast information to be used exclusively by "M2M" devices can then be implemented. Presently the SystemInformationBlockType2 contains ac-Barringlnfo and the ac-BarringForMO-Data and Signaling. New additions to the Block Type in the present invention include elements directed at M2M devices (optionally named): ac-BarringforMO-M2MData and ac-BarringforMO-M2MSignalling

The solution allows EUTRAN (i.e. eNodeB) to broadcast different access class barring info for "H2H" and "M2M" devices operating in the cell. One skilled in the art will appreciate that a similar solution can be provided for differing radio access networks, and it is anticipated that this solution can be used in Long Term Evolution (LTE) network, as well as in High Speed Packet Access (HSPA), GSM EDGE Radio Access Network (GERAN) and other networks including cdma2000, EVDO, WiMax and other such wireless cellular based networks.

By broadcasting to all devices, and specifying one of the newly proposed messages, all devices that have been designed to identify themselves as M2M devices will take themselves off line. This provides network operators the ability to bar "M2M" devices without barring "H2H" devices. Furthermore, it allows M2M and H2H to be independently barred with different probability factors and barring times. Devices with special AC 11-15 can bypass access class barring through presence of "ac-BarringFor SpecialAC" contained in either new IE (e.g. ac-BarringforMO-M2MData or ac-BarringforMO-M2MSignalling). Those skilled in the art will appreciate that providing the same functionality using different function names is considered to be well within the scope of the present invention. H2H devices need not be designed to recognize this command, and as such they will not detach from the network.

In summary, such a mechanism proves network operators with the ability to bar "M2M" devices without barring "H2H" devices. This allows simultaneous and independent control of the access given to M2M and H2H devices using different probability factors and barring times. Network operators retain the ability to allow access to M2M devices assigned special AC 11-15 to bypass access class barring through presence of "ac-BarringFor SpecialAC" contained in either new IE (e.g. ac-BarringforMO-M2MData or ac-BarringforMO-M2MSignalling). This introduces and allows a new category of automated M2M devices such as for security, emergency purposes and utility (e.g. M2M telemetry alarm from Nuclear power plant) that can access the network in overload situations. With these abilities, problems associated with network usage by errantly programmed M2M devices in large scale deployments of M2M will not necessarily adversely impact H2H devices by limiting RACH capacity and or network capacity

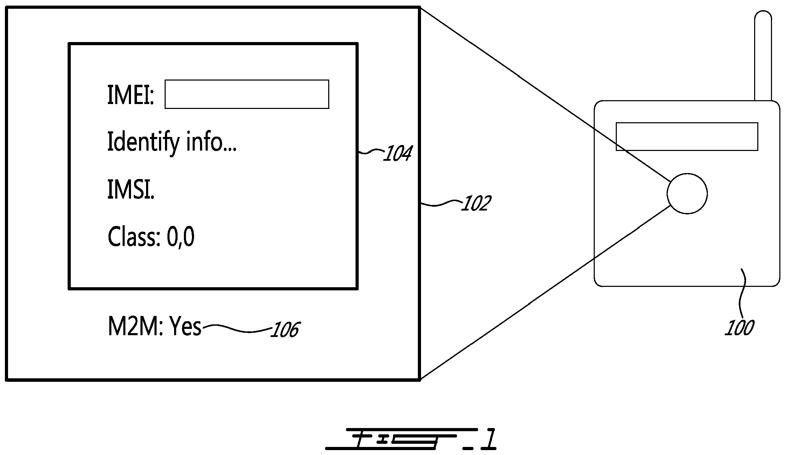

The above described solution will now be discussed in more details with respect to embodiments/comparative examples illustrated in the Figures. Figure 1 illustrates a machine to machine device 100 of a comparative example. Device 100 has a configuration 102 which includes conventional configuration information 104 including an IMEI, and at least one access class. Additionally a M2M configuration value 106 is included that allows the device to identify itself as a M2M device. It will be understood that in place of, or in addition to, a configuration value specifying that a device is an M2M device, this information can instead be provided to the device by instructing it how to process and respond to a command directed solely at M2M devices.

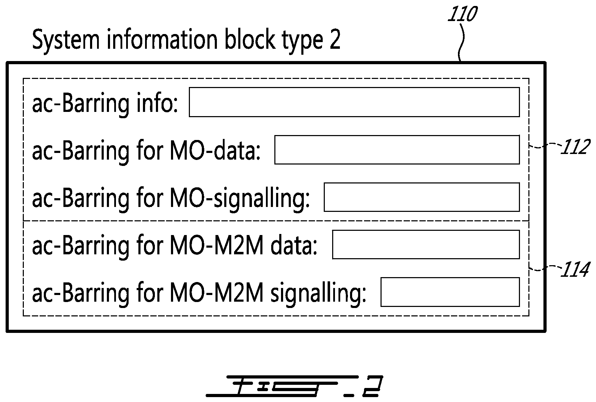

When a particular cell is overloaded, a System Information Block Type 2 (SIB Type 2) message is transmitted. Figure 2 illustrates a SIB Type 2 message 110 according to an embodiment of the present invention. In addition to conventional information 112 such as the ac-Barring Info, the ac-Barring for MO-data and ac-Barring for MO-signaling values (and other such messaging fields), the new SIB Type 2 message 110 includes new access class barring values 114 that are specific to M2M devices. In the illustrated embodiment, the new ac barring values 114 include "ac-BarringForMO-M2Mdata" and "ac-BarringForMO-M2Msignaling". One skilled in the art will appreciate that the specific naming of these fields is not crucial. The names of these parts of the new SIBType2 message can be varied without departing from the scope of the present invention.

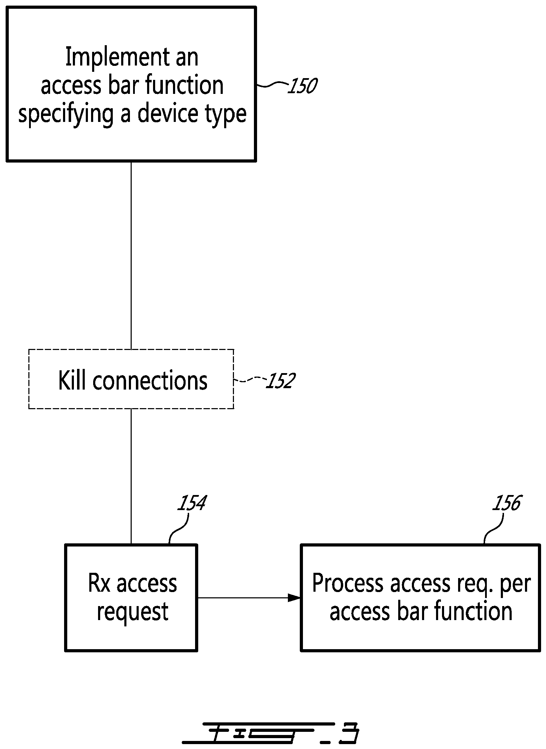

Figure 3 is a flowchart illustrating a method of the present invention executed by a network infrastructure element such as a radio access base station. In step 150, a decision is taken in the network base station to implement an Access Bar function that specifies a device type. This message can specify whether it applies to all devices in the type or just particular classes, the message can also specify whether it relates to all signaling or just data access, it can set bypass condition, and it can also deactivate all connection immediately. In optional step 152, all connections over the radio channel can be disconnected if so required. In step 154, the base station receives an access request and in step 156 processes the access request in accordance with the access bar function that specifies a device type that was implemented in step 150. Those skilled in the art will appreciate that the specification of a device type in step 150 can be achieved by either specifying the device type in a message, or by using a message that will only be processed by devices of the desired type.

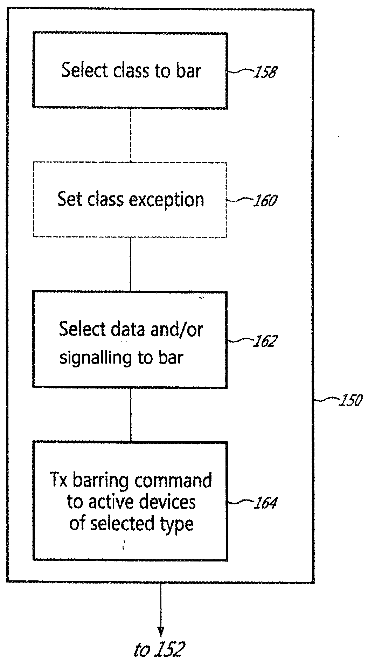

Figure 4 illustrates an embodiment of step 150 of Figure 3 in more detail. In step 158, a class that will be barred is selected. It should be noted that in this embodiment, the device type for barring has already been selected. If necessary a class exception is specified in step 160, and whether it is data or all signaling that is barred is selected in step 162. In step 164, the barring command is transmitted to active devices of the already selected type, and the process continues to step 152.

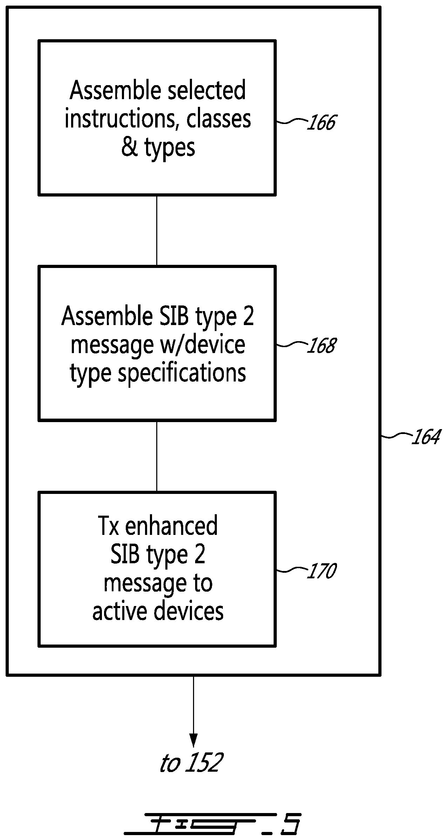

Figure 5 illustrates a particular embodiment of step 164 in Figure 4. In step 166, the selected instructions, classes and types are assembled. In step 168, a SIBType2 message is assembled using the device type specifications assembled in step 166. In step 170, the enhanced SIBType2 message is transmitted to active devices and the process continues to step 152.

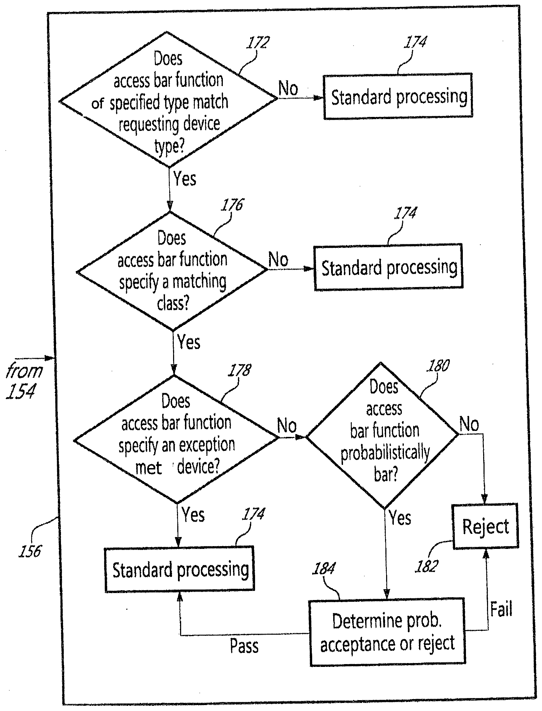

Figure 6 is a flowchart illustrating a method of carrying out step 156 of Figure 3 according to an embodiment of the present invention. In step 172 a determination is made as to whether the device type specified in the Access Bar function of step 150 matches the requesting device type. If there is no match, standard processing is followed in step 174. If there is a match, a determination is made in step 176 as to whether the Access Bar Function specifies a matching class to the requesting device. If no class match is found in step 176, standard processing occurs in step 174, otherwise the process continues to step 178. In step 178, a determination is made if the access bar function specifies another exception that is met by the device. If such a match occurs, standard access processing in step 174 is undertaken. However, if no such match occurs, a determination is made in step 180 as to whether the Access Bar function operates probabilistically. If the access barring function is not probabilistic, the connection is rejected in step 182. If the access barring function is probabilistic, a probabilistic test is executed in step 184. If the test is passed, then standard access processing is undertaken in step 174, while if the test is failed, the connection is rejected in step 182.

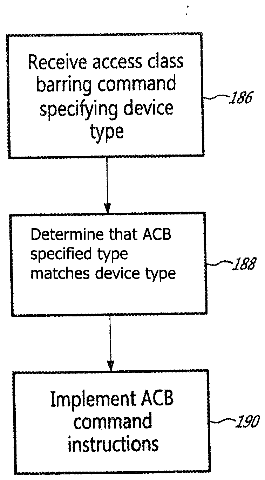

Figure 7 illustrates a method of a comparative example that can be executed on a device that accesses a network through a radio access channel, such as a M2M device. In step 186, an Access Class Barring Command specifying a device type is received. In step 188, a determination of whether the Access Class Barring Command type matches the device type is undertaken. In step 190, the Access Class Barring Command instructions are implemented as applicable.

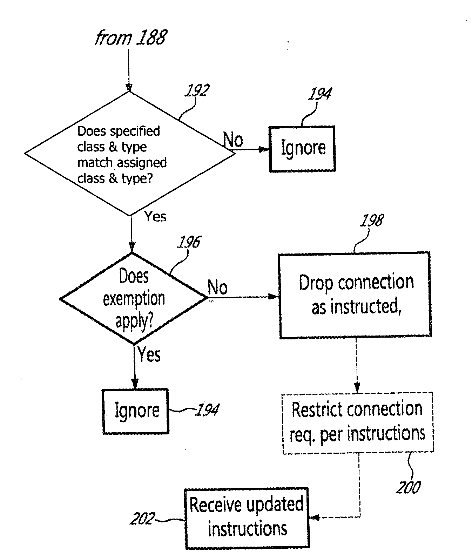

Figure 8 illustrates an example of a method of carrying out step 190 of Figure 7. In step 192 a determination is made if the specified class and type match the assigned class and type of the device. If there is no such match the ACB message is ignored in step 194. If there is a match, a determination is made in step 196 if the ACB message includes any exemptions that apply. If such exemptions apply, the ACB message is ignored in step 194. If no such exemptions apply, the connection is terminated as instructed in step 198. The connection may be terminated either immediately or after a delay, and such a delay can be specified in the ACB message. In step 200, the device can optionally restrict connection requests as specified in the ACB message. In step 202, the device receives updated instructions and then can act accordingly.

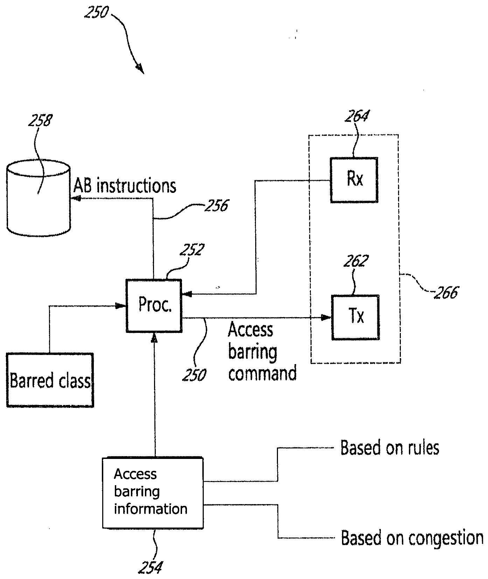

Figure 9 illustrates an exemplary radio access network element 250 of the present invention. Device 250 includes a processor 252 which receives access barring information 254, such information may include barring information based on congestion and/or rules. Those skilled in the art will appreciate that an operator can also trigger such an event for a variety of other reasons (such as maintenance or other operation needs) The access barring information 254 and barred classes, which can be selected at random, are used by processor 252 to generate Access Barring (AB) instructions 256, which are stored in database 258, and preferably specify a device type to which they apply. Based on the AB instructions 256, processor 252 can generate an Access Barring Command 260 that specifies a device type and which is sent to the radio access channel interface 266. Radio access channel interface 266 can include a functional transmitter 262 and receiver 264, the implementation of which will be well understood by those skilled in the art. The access barring command 250 can be relayed to a plurality of devices over the radio access channel. Over receiver 264, device 250 can receive requests for access, that are processed in accordance with the stored Access Barring instructions using methods such as those described earlier.

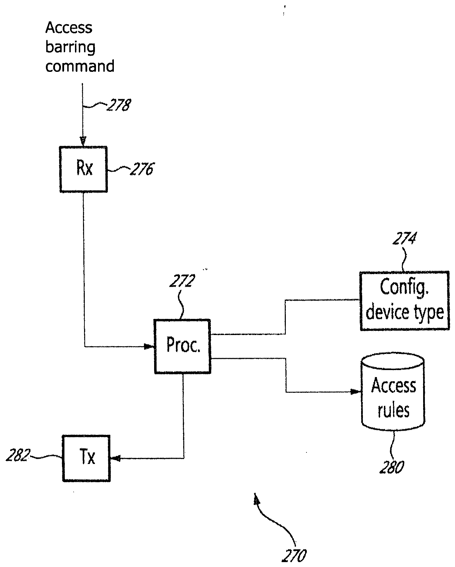

Figure 10 illustrates a mobile access device 270, such as M2M device of a comparative example. Device 270 includes processor 272, which has access a stored configuration that includes a specified device type. Receive 278 and transmitter 282 make up the radio access channel interface, and device 270 can receive an Access Barring Command 278 from the radio access network through receiver 276. When an Access Barring Command 278 is received by receiver 276, it is processed by processor 272. If the Access Barring Command 278 is determined to apply to both the device type and class associated with device 270, a new set of access rules 280 can be stored in a memory 280 and used to determine how access attempts are made to the network. It will be understood that processor 272 can determine if the access barring command 278 applies to the device through the use of a method such as those discussed above.

Embodiments of the invention may be represented as a software product stored in a machine-readable medium (also referred to as a computer-readable medium, a processor-readable medium, or a computer usable medium having a computer readable program code embodied therein). The machine-readable medium may be any suitable tangible medium including a magnetic, optical, or electrical storage medium including a diskette, compact disk read only memory (CD-ROM), digital versatile disc read only memory (DVD-ROM) memory device (volatile or nonvolatile), or similar storage mechanism. The machine -readable medium may contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention may also be stored on the machine-readable medium. Software running from the machine -readable medium may interface with circuitry to perform the described tasks.

## Claims

1. A method for barring access in a mobile device network, the method being performed in a radio access network, RAN, node (250) and comprising:
implementing (150) an access class barring, ACB, function specifying a device type to be barred, wherein a device of the device type to be barred is a Machine-to-Machine, M2M, type device, the implementing comprising:
- selecting (158) an access class to be barred (112);
- transmitting (164), when a particular cell is overloaded, an ACB command to active mobile devices of the device type, wherein
-- the ACB command is a System Information Block Type 2, SIBType2, message (110)comprising i) the access class to be barred (112) and ii) access class barring values (114) specific for the device type;
receiving (154) an access request from a mobile device in the mobile network; and
processing (156) the received access request in accordance with the implemented ACB function, the processing comprising:
- determining (172) whether the device type specified in the ACB function matches a device type of the requesting mobile device;
- if so, determining (176) whether the ACB Function specifies an access class matching an access class allocated to the requesting mobile device;
- if so, determining (178) if the ACB function specifies another exception that is met by the requesting mobile device;
- if the ACB function does not specify another exception that is met by the requesting mobile device, determining (180) whether the ACB function operates probabilistically:
-- if the ACB function is not probabilistic, rejecting (182) a connection for the requesting mobile device;
-- if the ACB function is probabilistic, executing (184) a probabilistic test, and if the test fails, rejecting (182) the connection for the requesting mobile device.

2. The method of claim 1 further including the step of terminating (152) all active connections after implementing the ACB function.

3. A computer-readable medium comprising code portions which, when executed on a processor in a radio access network, RAN, node, configure the RAN node to perform all steps of a method according to claim 1 or 2.

4. A radio access network, RAN, node (250) for determining network access, the node comprising:
a memory (258);
a RAN interface (266); and
a processor (252) operably connected to the memory and the RAN interface and configured to:
- implement an access class barring, ACB, function specifying a device type to be barred, wherein a device of the device type to be barred is a Machine-to-Machine, M2M, type device, the implementing comprising:
-- selecting an access class to be barred (112);
-- transmitting (164), when a particular cell is overloaded, an ACB command to active mobile devices of the device type, wherein
--- the ACB command is a System Information Block Type 2, SIBType2, message (110) comprising i) the access class to be barred (112) and ii) access class barring values (114) specific for the device type;
- receive an access request from a mobile device in the mobile network; and
- process the received access request in accordance with the implemented ACB function, the process operation comprising:
-- determining whether the device type specified in the ACB function matches a device type of the requesting mobile device;
-- if so, determining whether the ACB Function specifies an access class matching an access class allocated to the requesting mobile device;
-- if so, determining if the ACB function specifies another exception that is met by the requesting mobile device;
-- if the ACB function does not specify another exception that is met by the requesting mobile device, determining whether the ACB function operates probabilistically:
--- if the ACB function is not probabilistic, rejecting a connection for the requesting mobile device;
--- if the ACB function is probabilistic, executing a probabilistic test, and if the test fails, rejecting the connection for the requesting mobile device.

## Patentansprüche

1. Verfahren zum Sperren des Zugriffs in einem Netzwerk für Mobilgeräte, wobei das Verfahren in einem Funkzugriffsnetzwerk (Radio Access Network, RAN)-Knoten (250) ausgeführt wird und umfasst:
Implementieren (150) einer Zugangsklassensperrfunktion (Access Class Barring, ACB), die einen zu sperrenden Gerätetyp spezifiziert, wobei ein Gerät des zu sperrenden Gerätetyps ein Gerät vom Typ Machine-to-Machine, M2M, ist, wobei die Implementierung umfasst:
- Auswählen (158) einer zu sperrenden Zugriffsklasse (112);
- Übertragen (164) eines ACB-Befehls an aktive Mobilgeräte des Gerätetyps, wenn eine bestimmte Zelle überlastet ist, wobei
--der ACB-Befehl eine Systeminformationsblocktyp 2 (SIBTyp2)-Nachricht (110) ist, umfassend i) die zu sperrende Zugriffsklasse (112) und ii) für den Gerätetyp spezifische Zugriffsklassensperrwerte (114);
Empfangen (154) einer Zugriffsanforderung von einem Mobilgerät in dem mobilen Netzwerk; und
Verarbeiten (156) der empfangenen Zugriffsanforderung gemäß der implementierten ACB-Funktion, wobei die Verarbeitung umfasst:
- Bestimmen (172), ob der in der ACB-Funktion spezifizierte Gerätetyp mit einem Gerätetyp des anfordernden Mobilgeräts übereinstimmt;
- wenn ja, Bestimmen (176), ob die ACB-Funktion eine Zugriffsklasse spezifiziert, die einer dem anfordernden Mobilgerät zugeordneten Zugriffsklasse entspricht;
- wenn ja, Bestimmen (178), ob die ACB-Funktion eine weitere Ausnahme spezifiziert, die von der anfordernden Mobilgerät erfüllt wird;
- wenn die ACB-Funktion keine weitere Ausnahme spezifiziert, die von der anfordernden Mobilgerät erfüllt wird, Bestimmen (180), ob die ACB-Funktion probabilistisch arbeitet:
--wenn die ACB-Funktion nicht probabilistisch ist, Ablehnen (182) einer Verbindung für das anfragende Mobilgerät;
--wenn die ACB-Funktion probabilistisch ist, Ausführen (184) eines probabilistischen Tests, und wenn der Test fehlschlägt, Ablehnen (182) der Verbindung für das anfragende Mobilgerät.

2. Das Verfahren nach Anspruch 1, ferner beinhaltend den Schritt des Beendens (152) aller aktiven Verbindungen nach dem Implementieren der ACB-Funktion.

3. Computerlesbares Medium, umfassend Codeabschnitte, die, wenn sie auf einem Prozessor in einem Funkzugriffsnetzwerk (Radio Access Network, RAN)-Knoten ausgeführt werden, den RAN-Knoten konfigurieren, um alle Schritte eines Verfahrens nach Anspruch 1 oder 2 auszuführen.

4. Funkzugriffsnetzwerk (Radio Access Network, RAN)-Knoten (250) zum Ermitteln des Netzwerkzugriffs, wobei der Knoten umfasst:
einen Speicher (258);
eine RAN-Schnittstelle (266); und
einen Prozessor (252), der funktional mit dem Speicher und der RAN-Schnittstelle verbunden ist und eingerichtet ist, zum:
- Implementieren einer Zugriffsklassensperre (Access Class Barring, ACB)-Funktion, die einen zu sperrenden Gerätetyp spezifiziert, wobei ein Gerät des zu sperrenden Gerätetyps ein M2M-Gerät vom Typ Machine-to-Machine ist, wobei die Implementierung umfasst:
-- Auswählen einer zu sperrenden Zugriffsklasse (112);
-- Übertragen (164) eines ACB-Befehls an aktive Mobilgeräte des Gerätetyps, wenn eine bestimmte Zelle überlastet ist, wobei
--- der ACB-Befehl eine Systeminformationsblock Typ 2 (SIBTyp2)-Nachricht (110) ist, die i) die zu sperrende Zugriffsklasse (112) und ii) für den Gerätetyp spezifische Zugriffsklassensperrwerte (114) umfasst;
- Empfangen einer Zugriffsanforderung von einem Mobilgerät im mobilen Netzwerk; und
- Verarbeiten der empfangenen Zugriffsanforderung gemäß der implementierten ACB-Funktion, wobei der Prozessablauf umfasst:
-- Bestimmen, ob der in der ACB-Funktion spezifizierte Gerätetyp mit einem Gerätetyp der anfordernden Mobilgerät übereinstimmt;
-- wenn ja, Bestimmen, ob die ACB-Funktion eine Zugriffsklasse spezifiziert, die mit einer Zugriffsklasse übereinstimmt, die dem anfordernden Mobilgerät zugeordnet ist;
-- wenn ja, Bestimmen, ob die ACB-Funktion eine weitere Ausnahme spezifiziert, die von dem anfordernden Mobilgerät erfüllt wird;
-- wenn die ACB-Funktion keine weitere Ausnahme angibt, die von dem anfordernden Mobilgerät erfüllt wird, Bestimmen, ob die ACB-Funktion probabilistisch funktioniert:
--- wenn die ACB-Funktion nicht probabilistisch ist, Ablehnen einer Verbindung für das anfragende Mobilgerät;
--- wenn die ACB-Funktion probabilistisch ist, Ausführen eines probabilistischen Tests und wenn der Test fehlschlägt, Ablehnen der Verbindung für das anfragende Mobilgerät.

## Revendications

1. Procédé pour interdire l'accès dans un réseau de dispositif mobile, le procédé étant effectué dans un nœud de réseau d'accès radio, RAN, (250) et comprenant :
la mise en œuvre (150) d'une fonction d'interdiction de classe d'accès, ACB, spécifiant un type de dispositif à interdire, dans lequel un dispositif du type de dispositif à interdire est un dispositif de type machine à machine, M2M, la mise en œuvre comprenant :
- la sélection (158) d'une classe d'accès à interdire (112) ;
- la transmission (164), lorsqu'une cellule particulière est surchargée, d'une commande ACB à des dispositifs mobiles actifs du type de dispositif, dans lequel
-- la commande ACB est un message de bloc d'informations système de type 2, SIBType2, (110) comprenant i) la classe d'accès à interdire (112) et ii) des valeurs d'interdiction de classe d'accès (114) spécifiques pour le type de dispositif ;
la réception (154) d'une demande d'accès en provenance d'un dispositif mobile dans le réseau mobile ; et
le traitement (156) de la demande d'accès reçue conformément à la fonction ACB mise en œuvre, le traitement comprenant :
- le fait de déterminer (172) si le type de dispositif spécifié dans la fonction ACB correspond à un type de dispositif du dispositif mobile demandeur ;
- si oui, le fait de déterminer (176) si la fonction ACB spécifie une classe d'accès correspondant à une classe d'accès allouée au dispositif mobile demandeur ;
- si oui, le fait de déterminer (178) si la fonction ACB spécifie une autre exception qui est rencontrée par le dispositif mobile demandeur ;
- si la fonction ACB ne spécifie pas une autre exception qui est rencontrée par le dispositif mobile demandeur, le fait de déterminer (180) si la fonction ACB opère de manière probabiliste :
-- si la fonction ACB n'est pas probabiliste, le rejet (182) d'une connexion pour le dispositif mobile demandeur ;
-- si la fonction ACB est probabiliste, l'exécution (184) d'un test probabiliste, et si le test échoue, le rejet (182) de la connexion pour le dispositif mobile demandeur.

2. Procédé selon la revendication 1, incluant en outre l'étape consistant à mettre fin (152) à toutes les connexions actives après la mise en œuvre de la fonction ACB.

3. Support lisible par ordinateur comprenant des parties de code qui, lorsqu'elles sont exécutées sur un processeur dans un nœud de réseau d'accès radio, RAN, configurent le nœud RAN pour effectuer toutes les étapes d'un procédé selon la revendication 1 ou 2.

4. Nœud de réseau d'accès radio, RAN, (250) pour déterminer un accès réseau, le nœud comprenant :
une mémoire (258) ;
une interface RAN (266) ; et
un processeur (252) connecté fonctionnellement à la mémoire et à l'interface RAN et configuré pour :
- mettre en œuvre une fonction d'interdiction de classe d'accès, ACB, spécifiant un type de dispositif à interdire, dans lequel un dispositif du type de dispositif à interdire est un dispositif de type machine à machine, M2M, la mise en œuvre comprenant :
-- la sélection d'une classe d'accès à interdire (112) ;
-- la transmission (164), lorsqu'une cellule particulière est surchargée, d'une commande ACB à des dispositifs mobiles actifs du type de dispositif, dans lequel
--- la commande ACB est un message de bloc d'informations système de type 2, SIBType2, (110) comprenant i) la classe d'accès à interdire (112) et ii) des valeurs d'interdiction de classe d'accès (114) spécifiques pour le type de dispositif ;
- recevoir une demande d'accès en provenance d'un dispositif mobile dans le réseau mobile ; et
- traiter la demande d'accès reçue conformément à la fonction ACB mise en œuvre, l'opération de traitement comprenant :
-- le fait de déterminer si le type de dispositif spécifié dans la fonction ACB correspond à un type de dispositif du dispositif mobile demandeur ;
-- si oui, le fait de déterminer si la fonction ACB spécifie une classe d'accès correspondant à une classe d'accès allouée au dispositif mobile demandeur ;
-- si oui, le fait de déterminer si la fonction ACB spécifie une autre exception qui est rencontrée par le dispositif mobile demandeur ;
-- si la fonction ACB ne spécifie pas une autre exception qui est rencontrée par le dispositif mobile demandeur, le fait de déterminer si la fonction ACB opère de manière probabiliste :
--- si la fonction ACB n'est pas probabiliste, le rejet d'une connexion pour le dispositif mobile demandeur ;
--- si la fonction ACB est probabiliste, l'exécution d'un test probabiliste, et si le test échoue, le rejet de la connexion pour le dispositif mobile demandeur.
